(19) Europäisches Patentamt
European Patent Office
Office européen des brevets

(11) Publication number: 0 178 846
A2

# (12) EUROPEAN PATENT APPLICATION

(21) Application number: 85307244.5

(22) Date of filing: 10.10.85

(51) Int. Cl.⁴: C01B 33/28

(30) Priority: 17.10.84 US 661759

(43) Date of publication of application: 23.04.86 Bulletin 86/17

(84) Designated Contracting States: BE DE FR GB IT NL SE

(71) Applicant: MOBIL OIL CORPORATION
150 East 42nd Street
New York New York 10017(US)

(72) Inventor: Valyocsik, Ernest William
960 Randolph Drive
Yardley Pennsylvania 19067(US)

(74) Representative: West, Alan Harry
Mobil Court 3 Clements Inn
London WC2A 2EB(GB)

## (54) Synthesis of ZSM-23 zeolite.

(57) In a method of synthesizing highly siliceous ZSM-23 zeolite, an aqueous reaction mixture is prepared which comprises sources of an alkali metal, optionally an oxide of aluminum, an oxide of silicon, water and a nitrogen-containing organic cation $R^{++}$, and which has the following composition, in terms of mole ratios:

| | Broad | Preferred |
|---|---|---|
| $SiO_2/Al_2O_3$ | above 5,000 to infinity | 10,000 to infinity |
| $H_2O/SiO_2$ | 5 to 200 | 20 to 100 |
| $OH^-/SiO_2$ | 0 to 0.60 | 0.10 to 0.40 |
| $M^{n+}/SiO_2$ | 0.01 to 2.0 | 0.10 to 1.0 |
| $R^{++}/SiO_2$ | 0.01 to 2.0 | 0.05 to 1.0 |

wherein $M^{n+}$ is a cation of an alkali or alkaline earth metal of valence n and $R^{++}$ is an organic cation of the formula $(CH_3)_3N^+-R_1-N^+(CH_3)_3$ wherein $R_1$ is a saturated or unsaturated straight chain hydrocarbon group having seven carbon atoms. The reaction mixture is maintained at crystallization conditions until crystals of the ZSM-23 zeolite are formed, whereafter the crystals are separated from the liquid and recovered.

EP 0 178 846 A2

# SYNTHESIS OF ZSM-23 ZEOLITE

This invention relates to a method of synthesis of highly siliceous ZSM-23 crystalline zeolite.

Zeolitic materials, both natural and synthetic, have been demonstrated in the past to have catalytic properties for various types of hydrocarbon conversion. Certain zeolitic materials are ordered, porous crystalline aluminosilicates, having a definite crystalline structure as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as having a rigid three-dimensional framework of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example, an alkali metal or an alkaline earth metal cation. This can be expressed by the relationship of aluminum to the cations, wherein the ratio of aluminum to the number of various cations, such as Ca/2, Sr/2, Na, K, Cs or Li, is equal to unity. One type of cation may be exchanged either entirely or partially with another type of cation utilizing ion exchange techniques in a conventional manner. By means of such cation exchange, it has been possible to vary the properties of a given aluminosilicate by suitable selection of the cation. The spaces between the tetrahedra are occupied by molecules of water prior to dehydration.

Prior art techniques have resulted in the formation of a great variety of synthetic aluminosilicates. The aluminosilicates have come to be designated by letter or other convenient symbols, as illustrated by zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4 (U.S. Patent 3,314,752), zeolite ZSM-5 (U.S. Patent 3,702,886), zeolite ZSM-11 (U.S. Patent 3,709,979), zeolite ZSM-12 (U.S. Patent 3, 832,449), zeolite ZSM-20 (U.S. Patent 3,972,983), zeolite ZSM-23 (U.S. Patent 4,076,842), ZSM-35 (U.S. Patent 4,016,245), and ZSM-38 (U.S. Patent 4,046,859).

The $SiO_2/Al_2O_3$ ratio of a given zeolite is often variable. For example, zeolite X can be synthesized with $SiO_2/Al_2O_3$ ratios of from 2 to 3; zeolite Y, 3 to 6. In some zeolites, the upper limit of the $SiO_2/Al_2O_3$ ratio is unbounded. ZSM-5 is one such example wherein the $SiO_2/Al_2O_3$ ratio is at least 5, up to infinity. U.S. Patent 3, 941,871, now Re. 29,948, discloses a porous crystalline silicate zeolite made from a reaction mixture containing no deliberately added alumina and exhibiting the X-ray diffraction pattern characteristic of ZSM-5 type zeolites. U.S. Patents 4,061,724, 4,073,865 and 4,104,294 describe crystalline silicates or organosilicates of varying alumina and metal content.

Zeolite ZSM-23 has been previously synthesized in the presence of a nitrogen-containing organic cation or template such as pyrrolidine, as disclosed in U.S. Patent 4,076,842, but the synthesis was previously conducted at a relatively limited silica ($SiO_2$) to alumina ($Al_2O_3$) mole ratios of 40-250. EP-A-125078 discloses the preparation of ZSM-23 having a silica to alumina mole ratio of 40 to 5000. It has now been found that even higher silica to alumina ratios can be obtained for ZSM-23.

Accordingly, the invention resides in one aspect in a process for preparing a ZSM-23 zeolite having an X-ray diffraction pattern substantially as that given in Table I, comprising preparing a reaction mixture which comprises sources of an alkali or alkaline earth metal, an oxide of silicon, water and a nitrogen-containing organic cation $R^{++}$ and optionally a source of an oxide of aluminum, the mixture having the following composition, in terms of mole ratios:

$SiO_2/Al_2O_3$ = above 5000 to infinity

$H_2O/SiO_2$ = 5 to 200

$OH^-/SiO_2$ = 0 to 0.60

$M^{n+}/SiO_2$ = 0.01 to 2.0

$R^+/SiO_2$ = 0.01 to 2.0

wherein $M^{n+}$ is a cation of an alkali or alkaline earth metal of valence n, and $R^{++}$ is an organic cation of the formula $(CH_3)_3N^+-R_1-N^+(CH_3)_3$ wherein $R_1$ is a saturated or unsaturated straight chain hydrocarbon group having seven carbon atoms, and maintaining the mixture at crystallization conditions until crystals of the ZSM-23 zeolite are formed.

In a further aspect, the invention resides in a synthetic crystalline ZSM-5 zeolite material having in the as-synthesized form an x-ray diffraction pattern substantially as that given in Table I and having a formula, in terms of moles of oxides, in the anhydrous state:

$$(0.01\text{-}6)R_2O : (0\text{-}2)M_{2/n}O : (x)Al_2O_3 : (100)SiO_2$$

wherein $R_2$ is an oxide of an organic cation of the formula

$$(CH_3)_3N^+-R_1-N^+(CH_3)_3$$

wherein $R_1$ is a saturated or unsaturated straight chain hydrocarbon group having seven carbon atoms and M is an alkali or alkaline earth metal having a valence n, and x is from about 0 to 0.02.

The present invention is therefore based on the use of a particular organic template or directing agent, hereinafter referred to as a Diquat-7 cation, during zeolite synthesis. This organic template is derived from the Diquat-7 hydroxide or organic or inorganic salt of Diquat-7. The salts of Diquat-7 are obtained by reacting a suitable precursor salt containing the functional group $R_1$, e.g., a heptyl derivative, containing two anions at the terminal carbon atoms, such as, 1,7-dibromoheptane, with a stoichiometrically required amount of trimethylamine to form a diquaternary salt of the organic cation. The synthesis of the original salt of Diquat-7 can be carried out with any organic or inorganic precursor salt containing the functional group $R_1$. The $R_1$ group of the organic cation may be heptyl or it may have one or more double or triple unsaturated bonds. Thus, for example, $R_1$ may have one double unsaturated bond, or two or three consecutive or non-consecutive double unsaturated bonds, e.g.,

$-CH=CH-CH_2-CH_2-CH_2-CH_2-CH_2-$, -

$CH_2-CH=CH-CH_2-CH_2-CH_2-CH_2-$, -

$CH_2-CH_2-CH=CH-CH_2-CH_2-CH_2-$, -

$CH=CH-CH=CH-CH_2-CH_2-CH_2-$,

$-CH=CH-CH_2-CH_2-CH_2-CH=CH-$, -

$CH=CH-CH_2-CH=CH-CH=CH-$, -
$CH_2-CH=CH-CH=CH-CH=CH-$,
$-CH=C=C=CH-CH_2$ $-CH_2-CH_2-$, -
$CH_2-CH=CH-CH-CH=C=CH-$.

Alternatively, the $R_1$ group may contain at least one triple unsaturated bond, e.g.,
$=C-C-CH_2-CH_2-CH_2-CH_2-CH_2-$, or -
$CH_2-CH_2-C=C-CH_2-CH_2-CH_2-$.

In the most preferred embodiment, the $R_1$ group is heptyl.

The precursor salt contains two anions at the terminal carbon atoms of the functional group $R_1$. Thus, the precursor salt has a formula $A-R_1-A$, wherein $R_1$ is as defined above and A is an organic or inorganic anion. Suitable inorganic anions are phosphate, halogens, e.g., fluoride, chloride, bromide or iodide, sulfate, bisulfate, bisulfite, carbonate, bicarbonate, hexafluorophosphate, nitrate, oxyhalogen, such as chlorate, $ClO_3$- or perchlorate, $ClO_4$-. Representative suitable organic anions are carboxylate, $R-COO^-$, amide, $RCONH_2R$, alkoxide, $R_3CO^-$, or etherate, $RO^-$.

Suitable alkali or alkaline earth metals are lithium (Li), sodium (Na), potassium (K), cesium (Cs), magnesium (Mg), calcium (Ca), preferably sodium or potassium, and most preferably sodium. The synthesis of the Diquat-7 salt is conducted with continuous stirring at a temperature of 50°C. to 80°C., preferably 60 to 80°C., at autogenous pressure in a suitable non-aqueous solvent, such as alcohol, e.g., ethanol, toluene or tetrahydrofuran, until crystals of the Diquat-7 salt are formed, usually for 4 to 24 hours. The crystals of the product settle to the bottom, the reaction mixture is cooled e.g., in a water-ice bath, and the product is separated from the reaction mixture by any suitable means, e.g., by filtration. The crystals are then washed with a suitable solvent, e.g., absolute ethanol, followed by a wash with an anhydrous diethyl ether. The Diquat-7 salt crystals are then dried.

The hydroxide form of Diquat-7 may be obtained in any conventional manner from the salt of Diquat-7, such as by ion exchanging the salt of Diquat-7 with a suitable hydroxide in any conventional manner, e.g., in an ion-exchange column. Any of the conventional ion-exchange techniques may be used to replace the original anions with the hydroxide anion, as will be obvious to those skilled in the art. Representative of such ion exchange techniques are those disclosed in a wide variety of patents, e.g. U.S. Patents 3,140,249, 3,140,251 and 3,140,253.

The Diquat-7 salts or hydroxide, when used in the ZSM-23 synthesis in the manner described below, disassociate into the Diquat-7 cations and the respective anions.

The remainder of the components of the reaction mixture are provided by materials which can supply the appropriate oxides. Such materials include aluminates, alumina, silicates, silica hydrosol, precipitated silica, e.g. Hi-Sil, silica gel, silicic acid and hydroxides. It will be understood that each oxide component can be supplied by one or more essential reactants which can be mixed together in any order. For example, the alkali metal can be supplied by an aqueous solution of an oxide or hydroxide thereof, and the oxide of silicon by an aqueous solution of a suitable silicate. The aluminum oxide may be provided only as an impurity in another reactant, e.g., the silica source and in some cases, need not be intentionally added. Where very highly siliceous materials are desired as products, the reactants may be treated to remove at least some aluminum removal techniques. The reaction mixture can be prepared either batchwise or continuously. Crystal size and crystallization time of the ZSM-23 composition may vary with the nature of the reaction mixture employed.

The reaction mixture employed in this method has the following composition, in terms of mole ratios of oxides and ions:

| | Broad | Preferred | Most Preferred |
|---|---|---|---|
| $SiO_2/Al_2O_3$ | 5000 to infinity | 5000 to 20,000 | 5000 to 10,000 |
| $H_2O/SiO_2$ | 5 to 200 | 20 to 100 | 30 to 60 |
| $OH^-/SiO_2$ | 0 to 0.60 | 0.10 to 0.40 | 0.20 to 0.30 |
| $M^+/SiO_2$ | 0.01 to 2.0 | 0.10 to 1.0 | 0.2 to 0.8 |
| $R^+/SiO_2$ | 0.01 to 2.0 | 0.05 to 1.0 | 0.1 to 0.50 |

wherein $M^+$ is a cation of an alkali or alkaline earth metal and $R^{++}$ is the organic cation, designated Diquat-7.

Typical reaction conditions comprise heating the foregoing reaction mixture at a temperature of from 100°C to 204°C (212°F to 400°F) for a period of time of from 24 hours to 30 days. A more preferred temperature range is from 149°C to 191°C (300°F to 375°F) with the amount of time at a temperature in such range being from 24 hours to 7 days.

The digestion of gel particles is carried out until crystals form. The solid product is separated from the reaction medium, ina convention manner, e.g., by cooling the reaction mixture to room temperature, filtering and water washing.

The crystalline product is dried at a suitable temperature, e.g., at 110°C (230°F) for from 8 to 24 hours. Of course, milder drying conditions may be employed if desired, e.g., room temperature under vacuum.

The resultant ZSM-23 zeolite crystalline product has a characteristic X-ray diffraction pattern, set forth below in Table I.

TABLE I

TABLE I

| d(A) | I/I |
|---|---|
| 11.2 ± 0.23 | Medium |
| 10.1 ± 0.20 | Weak |
| 7.87 ± 0.15 | Weak |
| 5.59 ± 0.10 | Weak |
| 5.44 ± 0.10 | Weak |
| 4.90 ± 0.10 | Weak |
| 4.53 ± 0.10 | Strong |
| 3.90 ± 0.08 | Very Strong |
| 3.72 ± 0.08 | Very Strong |
| 3.62 ± 0.07 | Very Strong |
| 3.54 ± 0.07 | Medium |
| 3.44 ± 0.07 | Strong |
| 3.36 ± 0.07 | Weak |
| 3.16 ± 0.07 | Weak |
| 3.05 ± 0.06 | Weak |
| 2.99 ± 0.06 | Weak |
| 2.85 ± 0.06 | Weak |
| 2.54 ± 0.05 | Medium |
| 2.47 ± 0.05 | Weak |
| 2.40 ± 0.05 | Weak |
| 2.34 ± 0.05 | Weak |

The above values were determined by standard techniques. The radiation was the K-alpha doublet of copper, and a scinitillation counter spectrometer with a strip chart pen recorder was used. The peak heights, I, and the positions as a function of 2 times theta, where theta is the Bragg angle, were read from the spectrometer chart. From these, the relative intensities, 100 $I/I_o$, where $I_o$ is the intensity of the strongest line or peak, and d(obs.), the interplanar spacing in Angstrom units, corresponding to the recorded lines, were calculated. It should be understood that this X-ray diffraction pattern is characteristic of all the species of ZSM-23 compositions. Ion exchange of the sodium ion with cations reveals substantially the same pattern with some minor shifts in interplanar spacing and variation in relative intensity. Other minor variations can occur depending on the silicon to aluminum ratio of the particular sample, and on whether it has previously been subjected to thermal treatment.

In the as-synthesized form, the zeolite has the formula, in terms of mole ratios of oxides, as follows:

$$(0.01\text{-}6)\ R_2O:(0\text{-}2)\ M_{2/n}O:(x)\ Al_2O_3:100\ SiO_2.$$

wherein R is a derivative of the organic cation of the formula $(CH_3)_3N^+\text{-}R_1\text{-}N^+(CH_3)_3$ wherein $R_1$ is as defined above, M is an alkali metal or an alkaline earth metal having a valence n and x ranges from 0 to 0.02, for example, 0 to 0.01 or 0 to 0.005. Preferably, the mole ratio of $SiO_2/Al_2O_3$ of the ZSM-23 zeolite, in the as-synthesized form, is 5000 to 20,000.

The alkali or alkaline earth metal cations of the as synthesized ZSM-23 can be replaced in accordance with techniques well known in the art, at least in part by ion exchange with other cations. Preferred replacing cations include metal ions, ammonium ions, hydrogen ions and mixtures thereof. Particularly preferred cations are those which render the zeolite catalytically active, especially for hydrocarbon conversion. These include hydrogen, rare earth metals, aluminum metals of Groups IIA, IIIB, IVB, VIII, IB, IIB, IIIA and IVA.

Following ion exchange with the desired replacing cation, the zeolite is preferably washed with water and dried at a temperature ranging from 50°C to 300°C and thereafter may be calcined in air or other inert gas at from 200°C to a temperature below the zeolite decomposition temperature, preferably about 900°C, for periods of time ranging from 1 to 48 hours or more to remove organic material and produce a catalytically active form of the zeolite.

Synthetic ZSM-23 zeolites can be used either in the alkali metal containing form, the alkali metal form and hydrogen form or another univalent or multivalent cationic form. They can also be used in intimate combination with a hydrogenating component, such as tungsten, vanadium, molybdenum, rhenium, nickel, cobalt, chromium, manganese, or a noble metal, such as platinum or palladium where a hydrogenation-dehydrogenation function is to be performed. Combinations of the aforenoted metals may also be used. Such components can be exchanged into the composition, impregnated thereon or physically intimately admixed therewith. Such components can be impregnated in or on to ZSM-23, for example, by, in the case of platinum, treating the zeolite with a platinum metal-containing ion. Thus, suitable platinum compounds for this purpose include chloroplatinic acid, platinous chloride and various compounds containing the platinum amine complex. Combinations of metals and methods for their introduction can also be used. Synthetic ZSM-23, when employed either as an adsorbent or as a catalyst in a hydrocarbon conversion process, should be at least partially dehydrated. This can be done by thermal treatment, i.e., heating, to a temperature in the range of 50°C to 900°C in an inert temperature, such as air, nitrogen, and at atmospheric or subatmospheric pressures for between 1 and 48 hours. Dehydration can also be performed at lower temperature merely be placing the catalyst in a vacuum, but a longer time is required to obtain a sufficient amount of dehydration.

In the case of many catalysts, it is desired to incorporate the ZSM-23 zeolite with another material resistant to the temperatures and other conditions employed in organic conversion processes. Such matrix materials include active and inactive materials and synthetic or naturally occurring zeolites as well as inorganic materials, such as clays, silica and/or metal oxides. The latter may be either naturally occurring or in the form of gelatinous precipitates, sols or gels including mixtures of silica and metal oxides. The use of a matrix material in conjunction with the ZSM-23, i.e., combined therewith, which is active, tends to improve the conversion and/or selectivity of the catalyst in certain organic conversion processes. Inactive materials suitably serve as diluents to control the amount of conversion in a given process so that products can be obtained economically without employing other means for controlling the rate of reaction. Frequently, zeolite materials have been incorporated into naturally occurring clays, e.g., bentonite and kaolin. These materials, i.e., clays, oxides, etc., function, in part, as binders for the catalyst. It is desirable to provide a catalyst having good crush strength, because in a petroleum refinery the catalyst is often subjected to rough handling, which tends to break the catalyst down into powder-like materials which cause problems in processing.

Naturally occurring clays which can be composited with the synthetic ZSM-23 catalyst include the montmorillonite and kaolin family, which include the subbentonites, and the kaolins commonly known as Dixie, McNamee, Georgia and Florida clays or others in which the main mineral constituents are halloysite, kaolinite, dickite, nacrite, or anauxite. Such clays can be used in the raw state as originally mined or initially subjected to calcination, acid treatment or chemical modification.

In addition to the foregoing materials, the ZSM-23 catalyst can be composited with a porous matrix material such as silica-alumina, silica-magnesia, silica-zirconia, silica-thoria, silica-beryllia, silica-titania as well as ternary compositions such as silica -alumina-thoria, silica-alumina-zirconia, silica-alumina-magnesia and silica-magnesia-zirconia. The matrix can be in the form of a cogel. A mixture of these components could also be used. The relative proportions of finely divided crystalline aluminosilicate ZSM-23 and inorganic oxide gel matrix vary widely with the crystalline aluminosilicate content ranging from 1 to 90 percent by weight and more usually in the range of 2 to 70 percent by weight of the composite.

The ZSM-23 zeolite is useful in the processes of toluene disproportionation and alkylation, catalytic dewaxing, olefin oligomerization and aromatization of olefins or paraffins.

In employing the ZSM-23 catalyst of this invention for oligomerization of olefin containing liquid or gaseous charge stocks, such charge stocks can be contacted with the catalyst at temperatures of between 288°C and 454°C (550°F and 850°F) at an hourly space velocity of between 0.5 and 50 WHSV and a pressure of between 102 and 5617 kPa (0.1 and 800 psig).

In employing the catalyst of the present invention for aromatization of gaseous or liquid charge stocks which may be olefinic or paraffinic with or without aromatics present, such stocks can be aromatized at temperatures of between 427°C and 649°C (800°F and 1200°F) and pressures from 101 to 1013 kPa (1 to 10 atmospheres) and space velocities between 0.1 and 10 WHSV.

The following examples illustrate the invention.

## EXAMPLE A

A Diquat-7 dibromide salt was prepared by reacting 1,7 dibromoheptane and trimethylamine in accordance with the following stoichiometric equation:

$Br\text{-}(CH_2)_7\text{-}Br + 2(CH_3)_3N = Br(CH_3)_3N(CH_2)_7N(CH_3)_3Br$

The procedure used was as follows:

150 grams (0.58 mole) of 1,7-dibromoheptane (available from Aldrich Chemical Company) was weighed and transferred directly to a two-liter, three-necked reaction flask equipped with a stirrer. 300 ml absolute ethanol was added to the reaction flask while the contents of the flask were stirred continuously. Then, 300 grams (excess) of trimethylamine solution (25% in methanol, available from Eastman Kodak Chemical Company) was transferred directly to the two-liter reaction flask. The two-liter reaction flask was fitted with a dry-ice condenser to minimize $(CH_3)_3N$ loss during reflux.

The reaction mixture was refluxed for about 14 hours to produce white crystals of Diquat-7 dibromide. The reaction flask was then cooled by immersion in a water-ice bath and the product was then filtered on a Buchner funnel. Product crystals were washed on the funnel several times with absolute ethanol, then several times with anhydrous diethyl ether. The Diquat-7 dibromine product crystals were dried by air stream on the Buchner funnel after the ether wash.

## EXAMPLES 1 AND 2

The product of Example A was then used to effect crystallization of ZSM-23 of varying silica to alumina ratio using reaction mixtures having the molar composition shown in Table II below. In Example 1, the silica source was silica sol (30 wt%$SiO_2$, 70 wt% $A_2O$) and the aluminum source was sodium aluminate ($NaAlO_2$); whereas in Example 2 the silica source was HiSil precipitated silica which had been repeatedly acid extracted with HCR to remove aluminum and no aluminum source was added. In each case the sodium source was $Na_2O$, the $H_2O/SiO_2$ mole ratio was 40 and the reaction temperature was 160°C.

## TABLE II

| Example | $SiO_2/Al_2O_3$ | $OH^-/SiO_2$ | $Na/SiO_2$ | Diquat 7/ $SiO_2$ | Reaction Time (hrs) | Product |
|---|---|---|---|---|---|---|
| 1 | 8000 | 0.20 | 0.20 | 0.10 | 72 | 100% ZSM-23 |
| 2 | infinity | 0.20 | 0.20 | 0.10 | 120 | 100% ZSM-23 |

Analytical data for the as-synthesized ZSM-23 samples, in terms of mole ratios, is set forth in Table III.

TABLE III

| Example | $\frac{C}{N}$ (mole ratio) | Moles per mole $Al_2O_3$ | | |
|---|---|---|---|---|
| | | $N_2O$ | $Na_2O$ | $SiO_2$ |
| 1 | 7.0 | 48 | 13 | 2,140 |
| 2 | 6.4 | 304 | 63 | 10,050 |

**Claims**

1. A process for preparing a ZSM-23 zeolite having an X-ray diffraction pattern substantially as that given in Table I, comprising preparing a reaction mixture which comprises sources of an alkali or alkaline earth metal, an oxide of silicon, water and a nitrogen-containing organic cation $R^{++}$ and optionally a source of an oxide of aluminum, the mixture having the following composition, in terms of mole ratios:

$SiO_2/Al_2O_3$ = above 5000 to infinity

$H_2O/SiO_2$ = 5 to 200

$OH^-/SiO_2$ = 0 to 0.60

$M^{n+}/SiO_2$ = 0.01 to 2.0

$R^+/SiO_2$ = 0.01 to 2.0

wherein $M^{n+}$ is a cation of an alkali or alkaline earth metal of valence n, and $R^{++}$ is an organic cation of the formula $(CH_3)_3N^+-R_1-N^+(CH_3)_3$ wherein $R_1$ is a saturated or unsaturated straight chain hydrocarbon group having seven carbon atoms, and maintaining the mixture at crystallization conditions until crystals of the ZSM-23 zeolite are formed.

2. The process of Claim 1 wherein $R_1$ is a straight chain hydrocarbon group containing three double bonds.

3. The process of Claim 2 wherein $R_1$ is $-CH=CH-CH_2-CH=CH-CH=CH-$.

4. The process of Claim 1 wherein $R_1$ is heptyl.

5. A synthetic crystalline ZSM-23 zeolite material in the as-synthesized form having an X-ray diffraction pattern substantially as that given in Table I and having a formula, in terms of moles of oxides, in the anhydrous state:

$$(0.01\text{-}6)R_2O:\ (0\text{-}2)M_{2/n}O:(x)Al_2O_3:(100)SiO_2$$

wherein $R_2O$ is an oxide of an organic cation of the formula

$$(CH_3)_3N^+-R_1-N^+(CH_3)_3$$

wherein $R_1$ is a saturated or unsaturated straight chain hydrocarbon group having seven carbon atoms and M is an alkali or alkaline earth metal having a valence n, and x is from about 0 to 0.02.

6. The product of calcining the zeolite material of claim 5 to remove the organic material R.